# EUROPEAN PATENT SPECIFICATION

(11) **EP 2 995 403 B1**
(45) Date of publication and mention of the grant of the patent: **15.04.2020**
(21) Application number: 14794249.4
(22) Date of filing: 02.05.2014
(51) Int. Cl.: B23B 45/02, B25H 1/00

(54) **BATTERY-POWERED DRILLING MACHINE**
BATTERIEBETRIEBENE BOHRMASCHINE
PERCEUSE ALIMENTEE PAR BATTERIE

(30) Priority: 08.05.2013 JP 2013098268
(43) Date of publication of application: 16.03.2016
(73) Proprietor: Nitto Kohki Co., Ltd., Tokyo 146-8555 (JP)
(72) Inventor: YOKOYAMA, Toshiki, Tokyo 146-8555 (JP)
(74) Representative: Wagner, Karl H.
(86) International application number: PCT/JP2014/062136
(87) International publication number: WO 2014/181764

(56) References cited:
- EP-A1- 1 016 481
- EP-A2- 1 382 421
- DE-A1-102008 034 773
- DE-C1- 10 064 173
- DE-U1-202012 003 188
- JP-A- H0 230 410
- JP-A- H1 128 605
- JP-A- 2005 074 559
- JP-U- S6 196 609

## Description

### Technical Field:

The present invention relates to a portable drilling machine driven by a battery.

### Background Art:

A portable drilling machine has a frame, a drilling drive unit having a motor for rotationally driving a drilling tool, e.g. a drill, and vertically movably attached to the frame, and a securing unit provided underneath the frame to removably and securely hold the drilling machine to a workpiece, as disclosed, for example, in Patent Literature 1. The frame has an interior space. In the interior space is disposed a drive control unit for controlling the motor of the drilling drive unit and so forth, together with electric wiring, etc. The frame is usually made of a metal casting in order to ensure sufficient strength, and this limits available configurations of the frame and increases the wall thickness of the frame, leading to an increase in the overall size and weight of the drilling machine.

Recently, the use has been made of a battery to drive a drilling tool in order to improve the portability of drilling machines of the type described above. Usually, the battery is held in a battery receiving part provided in the frame. Accordingly, the frame formed as a casting correspondingly increases in size and weight.

### Citation List:

### Patent Literature:

Patent Literature 1:
Japanese Examined Utility Model Application Publication No. H7-35698. Prior art document DE 10 2008 034773 A1 discloses a drilling machine comprising a housing and a motor device wherein a motor carriage is secured to the housing. The motor device includes an electromotor and a drill wherein the motor carriage is driven to move the motor device relatively to the housing. A base which is connected with a part of the housing can be driven in order to magnetically connect the tool with a working piece. The drilling machine furthermore comprises a DC source and an AC input for the current supply of the motor. A current supply circuit, which is electrically connected with the DC source and the AC input connects the motor optionally with the DC source or the AC input in order to supply the motor with current.

### Summary of Invention:

### Technical Problem:

Accordingly, an object of the present invention is to provide a drilling machine using a battery and capable of being reduced in size and weight as compared with the above-described conventional drilling machines.
This and other objects are solved by a drilling machine having the features as set forth in claim 1. Preferred embodiments of the drilling machine are stated in the claims 2 to 12.

Thus, the present invention provides a drilling machine including: a frame having a lower wall portion removably attached to a workpiece to be subjected to drilling and a front wall portion contiguous with the lower wall portion and extending upward from the lower wall portion to form an L-shape together with the lower wall portion; a drilling drive unit having a motor for rotationally driving a drilling tool, the drilling drive unit being attached to the front side of the front wall portion so as to be vertically movable along the front wall portion to bring the drilling tool toward and away from the workpiece, with the lower wall portion secured to the workpiece; and a battery housing prepared separately from the frame and attached to the frame to hold a battery as a power source for driving the motor at a position at the rear side of the front wall portion and at the upper side of the lower wall portion. The frame has sufficient strength to support a load generated during the drilling by the drilling tool.

In the drilling machine, the frame supporting the drilling drive unit and having sufficient strength to support a load generated during the drilling by the drilling tool and the battery housing attached to the frame are formed as separate members, thereby allowing the mechanical strength of the battery housing to be reduced. Accordingly, the battery housing need not be made of a casting or the like as described above but can be formed of a resin material or the like. In addition, the degree of freedom for selecting a configuration increases, and the drilling machine can be made smaller in size and weight.

Furthermore, the battery housing comprises a right-side part and a left-side part, which are attached to the frame individually.

Preferably, an interior space for disposing a drive control circuit for controlling the motor may be formed between the frame and the battery housing.

The laterally split structure of the battery housing allows an improvement in the operability for assembling the circuit, wiring, etc. into the battery housing.

Preferably, the drilling machine may further include a securing unit attached to the lower side of the lower wall portion to removably secure the lower wall portion to the workpiece.

Preferably, the securing unit may be an electromagnet type securing unit connected to the battery.

More preferably, the drilling machine may further include an electromagnet switch for activating the electromagnet type securing unit and a motor switch for starting the motor. The electromagnet switch and the motor switch may be provided on the different lateral sides, respectively, of the battery housing.

With the structure in which the two switches are disposed on the different lateral sides, respectively, of the battery housing, interference between wiring lines wired to the two switches is less likely to occur, and the drilling machine can be made even smaller in size. In addition, assembleability is improved.

Preferably, the drive control circuit may be disposed parallel to the front wall portion or the lower wall portion of the frame in the interior space.

By disposing the drive control circuit as stated above, wasted space is reduced, and the drilling machine can be further downsized.

The frame is made of a metallic material, and the battery housing is made of a resin material.

The L-shaped frame supporting the drilling drive unit, which is relatively heavy in weight and subjected to a large force from the drilling tool during drilling, is made of a metallic material to ensure sufficient strength, while the battery housing, which is not subjected to a very large force, is made of a resin material. With this structure, it is possible to achieve a reduction in the overall weight of the drilling machine. Further, by using a resin material to make the battery housing for holding the battery, it is possible to prevent short circuit due to contact of a connecting terminal of the battery with a metallic member and to also prevent wear of and damage to the battery when the battery, which is usually covered with a resin casing, is loaded into and unloaded from the battery housing.

Preferably, the frame may have a right-side rib provided between the respective right-side edges of the lower wall portion and the front wall portion, and a left-side rib provided between the respective left-side edges of the lower wall portion and the front wall portion.

The provision of the right- and left-side ribs allows an increase in the strength of the frame.

The battery housing has an intermediate wall portion extending apart from and parallel to the front wall portion at the rear side of the front wall portion, and right- and left-side wall portions extending rearward from the right-and left-side edges, respectively, of the intermediate wall portion. The intermediate wall portion and the right- and left-side wall portions define a battery accommodating space for removably accommodating the battery.

The battery accommodating space for accommodating the battery is located at a position rearwardly separate from the front wall portion to which the drilling drive unit is attached, and consequently, the drilling drive unit and the battery, which are relatively heavy in weight, are disposed at respective positions separate from each other in the longitudinal direction. Accordingly, the overall weight balance of the drilling machine is improved, so that the drilling machine becomes unlikely to fall down. In addition, the drilling machine can keep a stable position even during being carried. Further, because the motor and the battery, which are heating elements, are disposed away from each other, efficient heat dissipation and cooling can be carried out.

The battery accommodating space has a bottom wall portion sandwiched between the right- and left-side wall portions. The bottom wall portion may be sloped downward from the front toward the rear.

With the above-described structure, water entering the battery accommodating space is discharged naturally.

Preferably, the arrangement may be as follows. The housing has a right-side grip portion provided on the top of the right-side part, and a left-side grip portion provided on the top of the left-side part. The right-side grip portion and the left-side grip portion form a grip when the right-side part and the left-side part are attached to the frame. The right-side grip portion and the left-side grip portion are connected and secured to each other with a screw extending from the right-side grip portion to the left-side grip portion.

With the structure in which a screw extends through the grip, which is subjected to a large force when the drilling machine is carried, it is possible to increase the strength of the grip by utilizing the strength of the screw.

Preferably, the front side of the front wall portion of the frame may be provided with a dovetail groove, and the drilling drive unit may be provided with a slider slidingly engageable with the dovetail groove.

The provision of the dovetail groove directly on the front wall portion of the frame allows a reduction in parts count and a further downsizing of the drilling machine.

Preferably, the arrangement may be as follows. The drive control circuit is disposed at a lower position in the interior space. A circuit member connected to the drive control circuit through wiring is provided at an upper position in the interior space. The battery housing has a partition plate dividing the interior space into upper and lower parts at a position between the drive control circuit and the circuit member. The partition plate is provided with a vertical opening communicating between the upper and lower parts. The opening is provided with a seal member sealingly engaged with the opening. The wiring is routed through the opening and sealed from the partition plate by the seal member.

Even if water enters the interior space around the circuit member, which is located in the upper part of the interior space, it is possible to prevent water from entering the lower part of the interior space, in which the drive control circuit is disposed.

An embodiment of the drilling machine according to the present invention will be explained below on the basis of the accompanying drawings.

### Brief Description of Drawings:

Fig. 1 is a perspective view of a drilling machine according to an embodiment of the present invention as seen from the left front side of the drilling machine.
Fig. 2 is a perspective view of the drilling machine shown in Fig. 1, as seen from the right front side of the drilling machine.
Fig. 3 is a partially sectioned view of the drilling machine shown in Fig. 1.
Fig. 4 is an exploded view of a body unit.
Fig. 5 is a rear perspective view of the drilling machine shown in Fig. 1, with a battery removed therefrom.
Fig. 6 is a rear perspective view of the drilling machine shown in Fig. 5, with a battery loaded therein.
Fig. 7 is a perspective view of the drilling machine shown in Fig. 1, with a drilling drive unit separated from the body unit.
Fig. 8 is a perspective view of the drilling drive unit shown in Fig. 7, as seen from a different angle from that of Fig. 7.

### Description of Embodiments:

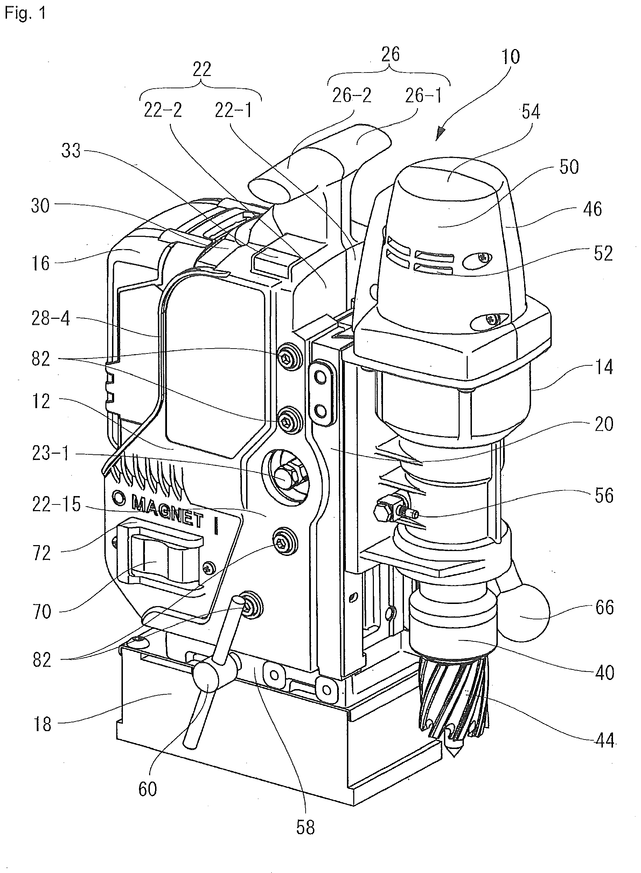

As shown in Figs. 1 to 3, a drilling machine 10 according to an embodiment of the present invention is a battery-operated portable drilling machine 10 having a body unit 12, a drilling drive unit 14 attached to the front side of the body unit 12 so as to vertically reciprocate relative to the body unit 12, a battery 16 loaded in the rear upper part of the body unit 12, and an electromagnet-type securing unit 18 attached to the lower side of the body unit 12 to securely hold the body unit 12 in a position for a drilling operation by the drilling machine 10. The drilling machine 10 is secured to a predetermined drilling operation position by the electromagnet-type securing unit 18. In this state, a drilling tool 44 attached to the lower end of the drilling drive unit 14 is driven to rotate by a motor 48, and a feed handle 66 attached to the body unit 12 is rotated to move the drilling drive unit 14 downward relative to the body unit 12 through a gear device comprising a rack 64 and a pinion 65, thereby drilling a workpiece with the drilling tool 44.

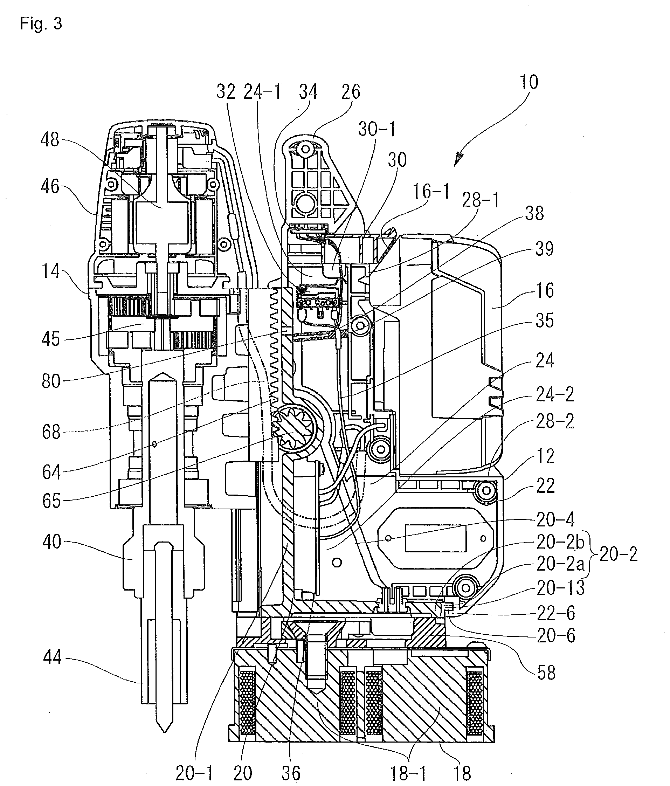

The body unit 12 has, as shown in Fig. 3, a structure comprising an L-shaped frame 20 and a battery housing 22. The frame 20 comprises a front wall portion 20-1 to which the drilling drive unit 14 is attached, and a lower wall portion 20-2 to which the electromagnet-type securing unit 18 is attached. The front wall portion 20-1 and the lower wall portion 20-2 form an L-shape. The battery housing 22 is attached to the frame 20 to removably hold the battery 16. The frame 20, to which the drilling drive unit 14 and the electromagnet-type securing unit 18 are attached directly and which is subjected to a relatively large force, is made of aluminum to ensure necessary and sufficient strength, while the battery housing 22, which is not subjected to such a large force, is made of a resin material to achieve a reduction in weight. Because the battery housing 22 is made of a resin material, no short circuit occurs even when a connecting terminal (not shown) of the battery 16 contacts the battery housing 22. It should be noted that the term "L-shaped frame" as used herein means to include any structure of frame 20 containing an L-shaped portion even if the overall configuration is not an L-shape, e.g. a frame structure in which a part of the lower wall portion 20-2 extends forward beyond the front wall portion 20-1 and which has therefore a non L-shape.

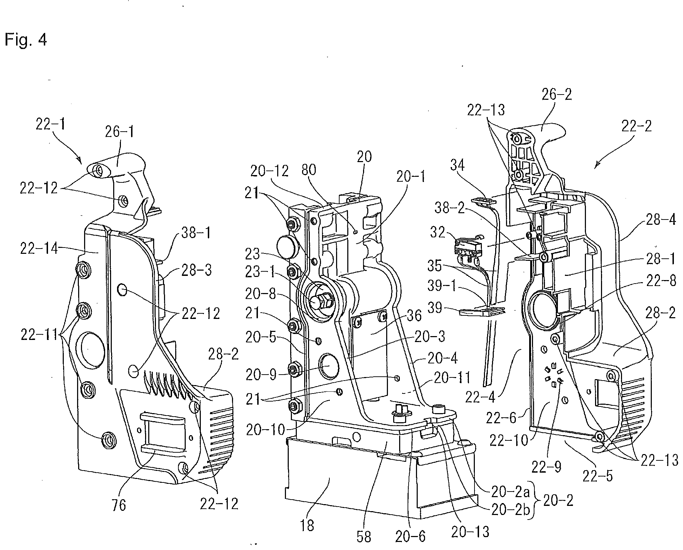

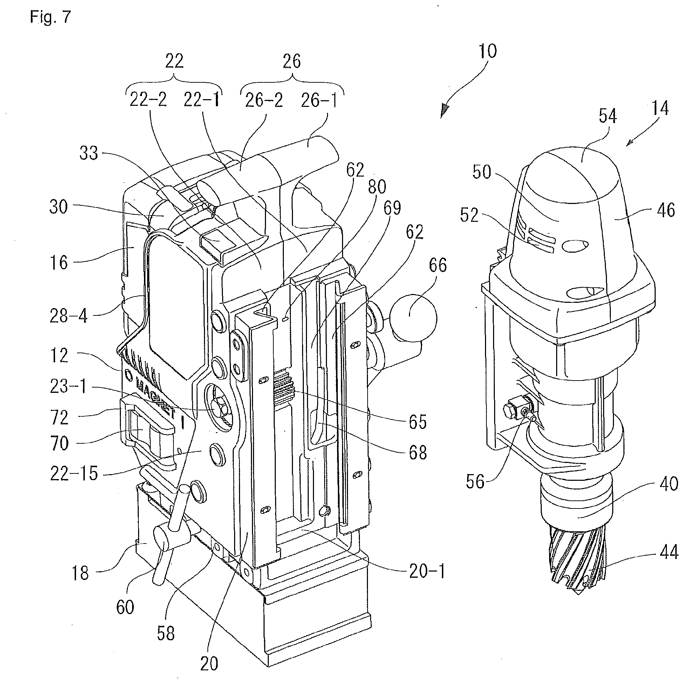

As shown in Fig. 4, the frame 20 has a right-side rib 20-3 provided between the respective right-side edges of the front wall portion 20-1 and the lower wall portion 20-2 and a left-side rib 20-4 provided between the respective left-side edges of the front wall portion 20-1 and the lower wall portion 20-2. The right- and left-side ribs 20-3 and 20-4 enhance the strength of the frame 20, which supports the drilling drive unit 14. Between the upper end portions of the right- and left-side ribs 20-3 and 20-4 is formed a handle mounting hole 20-8 extending between a right side 20-10 and a left side 20-11. The handle mounting hole 20-8 is provided therein with a shaft 23-1 to which a feed handle 66 is attached, and a circular cylindrical gear mechanism part 23 containing a pinion 65 (Figs. 3 and 7) for converting the rotation of the shaft caused by the feed handle 66 into vertical motion of the drilling drive unit 14.

The battery housing 22 comprises a right-side part 22-1 and a left-side part 22-2, which are defined by splitting the battery housing 22 at the center thereof. The right-side part 22-1 and the left-side part 22-2 are attached to the frame 20 in such a manner as to sandwich the frame 20 therebetween from the right and left sides. When the battery housing 22 is attached to the frame 20, an interior space 24 (Fig. 3) is formed between the battery housing 22 and the frame 20. In the interior space 24, a drive control circuit 36 (Fig. 4) is disposed at a position between the right- and left-side ribs 20-3 and 20-4 in parallel to the front wall portion 20-1. The drive control circuit 36 controls electric power supplied from the battery 16 to the motor 48 of the drilling drive unit 14 and to an electromagnet 18-1 in the electromagnet-type securing unit 18, as will be explained later. It should be noted that the drive control circuit 36 may be disposed on and parallel to the lower wall portion 20-2.

As shown in Fig. 4, the frame 20 is provided with engagement grooves 20-5 extending from the top 20-12 of the front wall portion 20-1 to the lower ends of the right and left sides 20-10 and 20-11, respectively. The lower wall portion 20-2 has an upper plate-shaped portion 20-2a and a lower block-shaped portion 20-2b integrally formed with the upper plate-shaped portion 20-2a. On the other hand, the battery housing 22 is provided with a front opening portion 22-4 for receiving the front wall portion 20-1 of the frame 20 and a lower opening portion 22-5 for receiving the lower wall portion 20-2 of the frame 20. In addition, the battery housing 22 is formed with an inwardly projecting edge portion 22-6 along the top and vertical edge of the front opening portion 22-4 and the edge of the lower opening portion 22-5. When the battery housing 22 is attached to the frame 22, the projecting edge portion 22-6 is engaged with the associated engagement groove 20-5 of the frame and with the lower surface 20-6 of the edge of the upper plate-shaped portion 20-2a. The battery housing 22 is further formed with a projecting annular edge portion 22-8 to be engaged with the handle mounting hole 20-8 of the frame 20. By arranging the area of engagement between the frame 20 and the edge portions of the battery housing 22 as stated above, it is made difficult for external dust and water to enter the interior space 24, where the drive control circuit 36 is disposed.

In addition, the battery housing 22 is formed with engagement projecting portions 22-9 to be engaged with circular engagement recesses 20-9, respectively, formed on the right- and left-side ribs 20-3 and 20-4 of the frame 20. Each engagement projecting portion 22-9 comprises 6 projections arranged in a circle. With this structure, the engagement between the battery housing 22 and the frame 20 is made even firmer. The battery housing 22 has screw insertion holes 22-11 provided in each of right and left sides 22-14 and 22-15 (Fig. 1) thereof. Screws 82 (Fig. 1) are inserted through the screw insertion holes 22-11, respectively, and engaged with 4 threaded holes 21, respectively, provided in each of the right and left sides 20-10 and 20-11 of the frame 20, thereby securing the battery housing 22 to the frame 20. Further, screws are inserted through 6 screw insertion holes 22-12, respectively, provided in the right-side part 22-1, and engaged with 6 threaded holes 22-13, respectively, provided in the left-side part 22-2, thereby connecting and securing the right-side part 22-1 and the left-side part 22-2 directly to each other. Thus, the battery housing 22 is secured to the frame 20 at a large number of points; therefore, stress concentration is less likely to occur even when a large force is applied to the battery housing 22, and the danger of the battery housing 22 being broken is reduced.

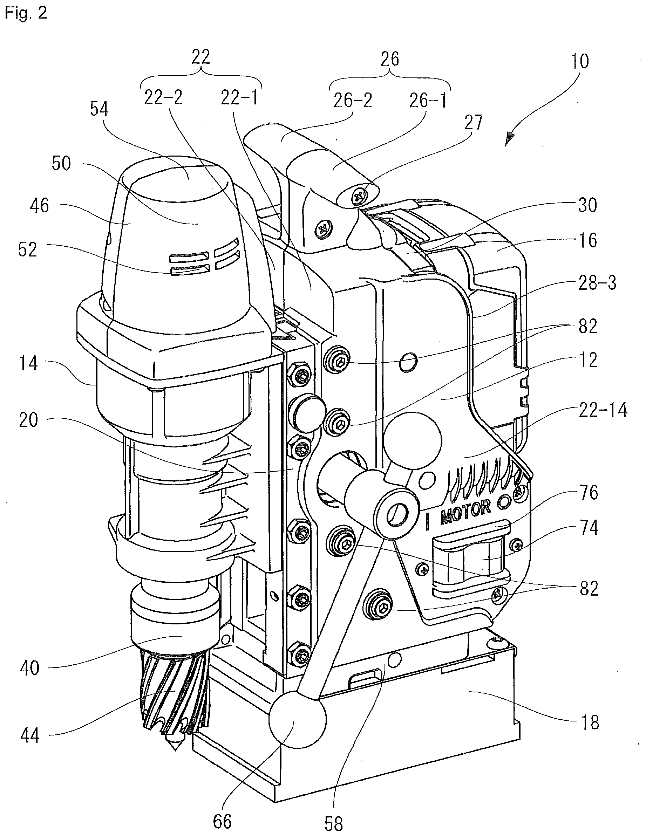

A grip 26 provided on the top of the battery housing 22 comprises, as shown in Fig. 4, a right-side grip portion 26-1 formed on the right-side part 22-1 of the battery housing 22 and a left-side grip portion 26-2 formed on the left-side part 22-2 of the battery housing 22. The right-side grip portion 26-1 and the left-side grip portion 26-2 form a grip 26 (Fig. 1) when the right-side part 22-1 and the left-side part 22-2 are attached to the frame 20. The right-side grip portion 26-1 and the left-side grip portion 26-2 are connected and secured to each other by a screw 27 (Fig. 2) extending from the right-side grip portion 26-1 to the left-side grip portion 26-2. The screw functions also as a reinforcing member to increase the strength of the grip 26.

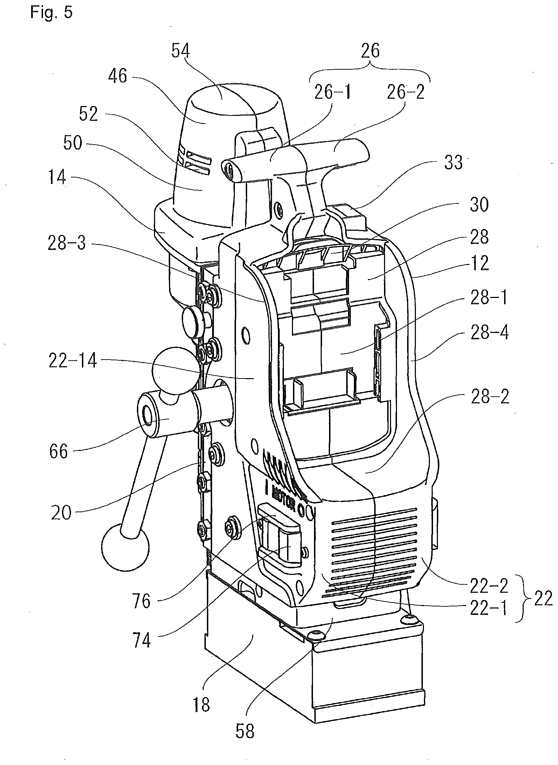

As shown in Fig. 5, a battery accommodating space 28 for receiving the battery 16 is provided at the rear upper part of the battery housing 22. The battery 16 is removably loaded in the battery accommodating space 28. The battery accommodating space 28 is defined as a space surrounded by an intermediate wall portion 28-1 extending apart from and parallel to the front wall portion 20-1 of the frame 20 at the rear of the front wall portion 20-1, a bottom wall portion 28-2 contiguous with the intermediate wall portion 28-1, and a right-side wall portion 28-3 and a left-side wall portion 28-4 extending rearward from the right- and left-side edges, respectively, of the intermediate wall portion 28-1. The battery accommodating space 28 is open at the upper and rear sides thereof. The battery 16 is slidingly inserted into the battery accommodating space 28 from the open upper side toward the lower side, thereby being loaded into the battery accommodating space 28. The bottom wall portion 28-2 is slightly sloped downward from the front toward the rear, so that water entering the battery accommodating space 28 is discharged naturally. When the battery 16 is loaded in the battery accommodating space 28, connecting terminals of the battery 16 face downward to prevent water or dust from easily entering the battery 16.

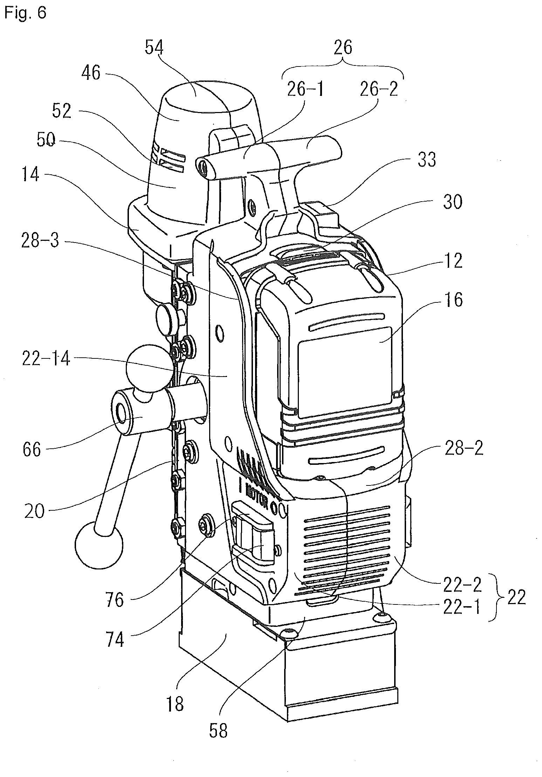

At the top of the battery housing 22, a battery cover 30 is provided slidably in the front-back direction. When the battery 16 is loaded as shown in Fig. 6, the battery cover 30 projects rearward from the battery housing 22 to abut against an inclined cover engaging surface 16-1 (Fig. 3) of the battery 16, thereby making the battery 16 unable to be removed from the battery housing 22. In this state, the battery cover 30 covers (although partially) the gap between the intermediate wall portion 28-1 of the battery housing 22 and the battery 16 from above. Therefore, machining swarf, water, etc. can be prevented from easily entering the terminal part of the battery 16. To remove the battery 16, the battery cover 30 is pushed forward to retract into the battery housing 22, and then the battery 16 is pulled out upward. The provision of the battery cover 30 also prevents the battery 16 from becoming dislodged accidentally. As will be clear from Fig. 3, the battery cover 30 has a downwardly projecting switch engaging projection 30-1 provided on a part thereof located in the battery housing 22. When the battery cover 30 projects rearward to abut against the battery 16, the switch engaging projection 30-1 pushes to turn on a limit switch 32 provided in the body unit 12. When the battery cover 30 retracts forward, the switch engaging projection 30-1 turns off the limit switch 32. The limit switch 32 is connected to a drive control circuit 36 disposed in the interior space 24. The limit switch 32 is used to monitor whether or not the battery 16 is correctly loaded and whether or not the battery 16 is in a removable position. The loaded battery 16 is electrically connected to the drive control circuit 36 to supply electric power to the motor 48 and the electromagnet-type securing unit 18 through the drive control circuit 36. The electric power supplied from the battery 16 to the motor 48 and the electromagnet-type securing unit 18 is appropriately controlled by the drive control circuit 36.

As shown in Fig. 3, the interior space 24, which is formed between the battery housing 22 and the frame 20, has an upper interior space 24-1 located in an upper part of the interior space 24. An LED display circuit 34 is disposed in the upper interior space 24-1 in such a manner as to be visible from the outside of the battery housing 22. The LED display circuit 34 displays a status of the drilling machine 10 through an LED display 33 (Fig. 1) on the top of the battery housing 22 according to a signal from the drive control circuit 36. The LED display circuit 34 has green, yellow and red LEDs to inform the operator about the remaining capacity of the battery 16 and the level of load on the motor 48 and to warn the operator about occurrence of abnormality by blink patterns of the LEDs. It should be noted that it is also possible to use a single LED packaged as a single device capable of emitting different colors, in place of a set of discrete LEDs respectively emitting green, yellow and red light. The above-described limit switch 32 is disposed underneath the LED display circuit 34. The drive control circuit 36, the LED display circuit 34 and the limit switch 32 are electrically connected to each other through wiring 35 covered with shrinkable tubing or the like. The battery housing 22 is provided with a partition plate 38 at a position between the drive control circuit 36, on the one hand, and, on the other, the LED display circuit 34 and the limit switch 32 to separate a lower interior space 24-2, where the drive control circuit 36 is disposed, from the upper interior space 24-1, where the LED display circuit 34 and the limit switch 32 are disposed. More specifically, as shown in Fig. 4, a right-side partition plate 38-1 provided in the right-side part 22-1 of the battery housing 22 and a left-side partition plate 38-2 provided in the left-side part 22-2 of the battery housing 22 face each other in such a manner as to form an L-shaped opening therebetween, and an L-shaped seal member 39 is attached so as to sealingly engage the opening. The L-shaped seal member 39 has a wiring insertion hole 39-1 formed in the center thereof, and the wiring 35 connected to the LED display circuit 34 and the limit switch 32 is passed through the wiring insertion hole 39-1 and thus sealed. The partition plate 38 is provided so as to slope downward from the rear toward the front. In addition, a drain port 80 is provided in a part of the front wall portion 20-1 of the frame 20 that is located in the upper interior space 24-1. The upper interior space 24-1 is not sealed from the outside because the upper interior space 24-1 slidably receives the battery cover 30, which projects to the outside of the battery housing 22. Therefore, there is a possibility that water, e.g. rainwater, may enter the upper interior space 24-1 from the outside. However, the above-described structure having the sloped partition plate 38 and the drain port 80 makes it possible to discharge water entering the upper interior space 24-1 to the outside from the drain port 80 without allowing the water to enter the lower interior space 24-2, in which the drive control circuit 36 is located. Consequently, it is possible to prevent the drive control circuit 36 from being wet with water, which would otherwise cause a failure. Further, the upper surface of the upper plate-shaped portion 20-2a slopes downward from the front toward the rear, so that if water should enter the lower interior space 24-2, the water is discharged to the outside from a drain groove 20-13 provided at the rear end of the upper plate-shaped portion 20-2a.

The drilling drive unit 14 attached to the front side of the front wall portion 20-1 of the frame 20 has an arbor 40 located at the lower side of the drilling drive unit 14. The arbor 40 is fitted with a drilling tool 44 such as a drill or an annular cutter. As shown in Fig. 3, the arbor 40 is connected through a speed reducer 45 to a motor 48 provided in a motor cover 46 at the upper side of the drilling drive unit 14. The drilling tool 44 is driven to rotate by driving the motor 48. As shown in Fig. 1 and other figures, the motor cover 46 has a plurality of vent holes 52 provided in side surfaces 50 thereof to cool the motor 48 by air flowing in through the vent holes 52. The reason why the vent holes 52 are provided not in a top surface 54 but in the side surfaces 50 is to prevent, as much as possible, water or foreign objects, such as machining swarf and dust, from entering the inside of the motor cover 46. The left side of the drilling drive unit 14 is provided with a plug 56 serving as a cutting fluid filler port. A one-touch socket with hose is attached to the plug 56 to supply a cutting fluid to the drilling tool 44 during drilling.

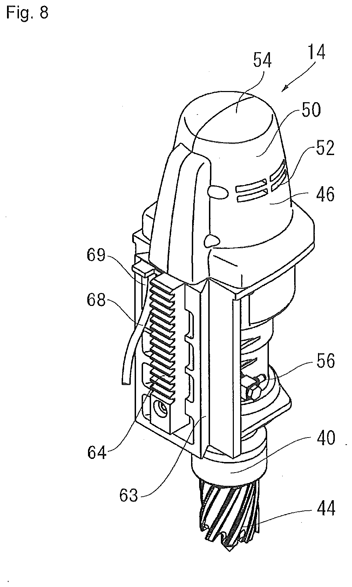

As shown in Fig. 7, the front side of the front wall portion 20-1 of the frame 20 has vertically extending dovetail grooves 62 formed on the right and left sides thereof. The drilling drive unit 14 is, as shown in Fig. 8, provided with a slider 63 having right-and left-side edges shaped to correspond to the dovetail grooves 62. The slider 63 is provided with a rack 64 (Fig. 8), and the frame 20 is provided with a pinion 65 (Fig. 7) to be engaged with the rack 64. The pinion 65 is rotated by manually rotating a feed handle 66 removably attached to an end of the shaft 23-1 projecting from the right side 20-10 (Fig. 2) of the frame 20, thereby vertically moving the drilling drive unit 14 relative to the frame 20. It should be noted that the feed handle 66 can also be attached to an end of the shaft 23-1 projecting from the left side 20-11 of the frame 20. Thus, the feed handle 66 can be attached to either of the right and left sides of the frame 20 according to each particular situation.

Wiring 68 extending from the motor 48 of the drilling drive unit 14 passes through a wiring insertion passage 69 (Figs. 7 and 8) formed between one dovetail groove 62 and the slider 63, as shown in Fig. 3, and leads into the interior space 24 of the body unit 12, in which the wiring 68 is connected to the drive control circuit 36. Thus, almost no part of the wiring 68 is exposed to the outside. In this way, the wiring is prevented from being disconnected by application of an excessively large force thereto which might otherwise occur when the wiring is caught on something, for example.

The electromagnet-type securing unit 18 attached to the lower side of the body unit 12 is configured such that, when electric power is supplied to the electromagnet 18-1 therein, the electromagnet-type securing unit 18 generates a magnetic field and thus magnetically adheres to a magnetic material, e.g. iron, thereby securely holding the drilling machine 10. A position adjusting mechanism 58 is provided between the electromagnet-type securing unit 18 and the frame 20 to allow the position of the body unit 12 to be adjusted both longitudinally and laterally relative to the electromagnet-type securing unit 18 by turning a position adjusting handle 60 removably attached to the position adjusting mechanism 58, thereby enabling the drilling position to be finely adjusted. It should be noted that the position adjusting handle 60 can also be attached to the right side of the position adjusting mechanism 58.

As shown in Fig. 1, the left side 22-15 of the battery housing 22 is provided with an electromagnet switch 70 for activating the electromagnet-type securing unit 18. A wall 72 is provided around the electromagnet switch 70 to prevent the electromagnet switch 70 from being actuated carelessly. The electromagnet switch 70 is configured to be turned off by pressing the rear (left as seen in Fig. 1) end portion thereof. The wall 72 is raised in height at its rear end portion so that the electromagnet switch 70 is not easily accidentally switched, particularly from on to off. As shown in Fig. 2, the right side 22-14 of the battery housing 22 is provided with a motor switch 74 for starting the motor 48. A wall 76 is also provided around the motor switch 74 to prevent the motor switch 74 from being actuated carelessly. Thus, the electromagnet switch 70 and the motor switch 74 are disposed on the different lateral sides 22-15 and 22-14, respectively, of the battery housing 22. With this structure, it becomes easy to ensure the areas for placing the switches. In addition, because interference between wiring lines in the interior space 24 is reduced, it is possible to design the battery housing 22 to be smaller in size. Further, it is possible to prevent the electromagnet switch 70 and the motor switch 74 from being actuated mistakenly from each other.

In the drilling machine 10 according to this embodiment, the body unit 12 is configured, as stated above, to comprise the L-shaped frame 20 made of aluminum and the battery housing 22 made of a resin material, which are discrete components, thereby realizing a reduction in the overall size and weight of the drilling machine 10. In addition, the battery 16, which is relatively heavy in weight, is disposed at a position rearwardly away from the drilling drive unit, which is also heavy in weight, thereby improving the weight balance to realize high stability, and thus preventing a fall during drilling and also improving portability. Further, the motor 48 and the battery 16, which are heating elements, are disposed at respective positions away from each other across a resin material of small heat conductivity, thereby reducing the mutual heat influence and thus improving the cooling performance.

Although in this embodiment the front wall portion 20-1 and the lower wall portion 20-2 of the frame 20 are flat plate-shaped members, the front and lower wall portions 20-1 and 20-2 may be formed by combining together columnar and circular cylindrical members, for example. Further, although the frame 20 is made of aluminum, it is possible to use any material capable of obtaining sufficient strength to form the frame 20, i.e. other metallic materials, non-metallic materials, e.g. high-strength plastics, or a combination of a plurality of materials. Further, although the battery housing 22 is made of a resin material, it is also possible to use other materials including a metallic material to form the battery housing 22. If the battery housing 22 is formed by using an electrically conductive material, e.g. a metal; in particular, a non-electrically conductive material, e.g. a resin material, is used to form a part that constitutes the battery accommodating space 28, particularly a part that is very likely to be touched by a connecting terminal of the battery 16, thereby preventing short circuit of the battery 16. Further, the securing unit of the drilling machine 10 is not limited to the electromagnet-type securing unit but may be of any other type, e.g. a securing unit using a permanent magnet or a clamp mechanism.

### List of Reference Signs:

drilling machine 10; body unit 12; drilling drive unit 14; battery 16; cover engaging surface 16-1; electromagnet-type securing unit 18; electromagnet 18-1; frame 20; front wall portion 20-1; lower wall portion 20-2; upper plate-shaped portion 20-2a; lower block-shaped portion 20-2b; right-side rib 20-3; left-side rib 20-4; engagement grooves 20-5; lower surface 20-6; handle mounting hole 20-8; engagement recess 20-9; right side 20-10; left side 20-11; upper surface 20-12; drain groove 20-13; threaded holes 21; battery housing 22; right-side part 22-1; left-side part 22-2; front opening portion 22-4; lower opening portion 22-5; projecting edge portion 22-6; projecting annular edge portion 22-8; engagement projecting portion 22-9; inner surface 22-10; screw insertion holes 22-11; screw insertion holes 22-12; threaded holes 22-13; right side 22-14; left side 22-15; gear mechanism part 23; shaft 23-1; interior space 24; upper interior space 24-1; lower interior space 24-2; grip 26; right-side grip portion 26-1; left-side grip portion 26-2; screw 27; battery accommodating space 28; intermediate wall portion 28-1; bottom wall portion 28-2; right-side wall portion 28-3; left-side wall portion 28-4; battery cover 30; switch engaging projection 30-1; limit switch 32; LED display 33; LED display circuit 34; wiring 35; drive control circuit 36; partition plate 38; right-side partition plate 38-1; left-side partition plate 38-2; seal member 39; wiring insertion hole 39-1; arbor 40; drilling tool 44; speed reducer 45; motor cover 46; motor 48; side surfaces 50; vent holes 52; top surface 54; plug 56; position adjusting mechanism 58; position adjusting handle 60; dovetail grooves 62; slider 63; rack 64; pinion 65; feed handle 66; wiring 68; wiring insertion passage 69; electromagnet switch 70; wall 72; motor switch 74; wall 76; drain port 80; screws 82

## Claims

1. A drilling machine (10) comprising:
a frame (20) having a lower wall portion (20-2) removably attached to a workpiece to be subjected to drilling and a front wall portion (20-1) contiguous with the lower wall portion (20-2) and extending upward from the lower wall portion (20-2) to form an L-shape together with the lower wall portion (20-2), the frame (20) being made of a metallic material;
a drilling drive unit (14) having a motor (48) for rotationally driving a drilling tool (44), the drilling drive unit (14) being attached to a front side of the front wall portion (20-1) so as to be vertically movable along the front wall portion (20-1) to bring the drilling tool (44) toward and away from the workpiece, with the lower wall portion (20-2) secured to the workpiece; and
a battery housing (22) prepared separately from the frame (20) and made of a resin material, the battery housing (22) being attached to the frame (20) to form a body unit (12) of the drilling machine (10) together with the frame (20), the battery housing (22) having an intermediate wall portion (28-1) positioned directly above the lower wall portion (20-2) and extending apart from and parallel to the front wall portion (20-1) and a bottom wall portion (28-2) extending rearward from the intermediate wall portion (28-1), the intermediate wall portion (28-1) and the bottom wall portion (28-2) cooperating to define a battery accommodating space (28) to removably receive a battery (16) as a power source for driving the motor (48) such that at least a portion of the battery accommodating space (28) is positioned at a rear side of the front wall portion (20-1) and directly above the lower wall portion (20-2), the battery housing (22) comprising a right-side part (22-1) and a left-side part (22-2), which are attached to the frame (20)in such a manner as to sandwich the frame (20) therebetween from right and left sides.

2. The drilling machine (10) of claim 1, wherein an interior space (24) for disposing a drive control circuit (36) for controlling the motor (48) is formed between the frame (20) and the battery housing (22).

3. The drilling machine (10) of any one of claims 1 or 2, further comprising:
a securing unit (18) attached to a lower side of the lower wall portion (20-2) to removably secure the lower wall portion (20-2) to the workpiece.

4. The drilling machine (10) of claim 3, wherein the securing unit (18) is an electromagnet type securing unit connected to the battery (16).

5. The drilling machine (10) of claim 4, further comprising:
an electromagnet switch (70) for activating the electromagnet type securing unit (18); and
a motor switch (74) for starting the motor (48);
wherein the electromagnet switch (70) and the motor switch (74) are provided on different lateral sides, respectively, of the battery housing (22).

6. The drilling machine (10) of claim 2, wherein the drive control circuit (36) is disposed parallel to the front wall portion (20-1) or the lower wall portion (20-2) of the frame (20) in the interior space (24).

7. The drilling machine (10) of any one of claims 1-6, wherein the frame (20) has a right-side rib (20-3) provided between respective right-side edges of the lower wall portion (20-2) and the front wall portion (20-1), and a left-side rib (20-4) provided between respective left-side edges of the lower wall portion (20-2) and the front wall portion (20-1).

8. The drilling machine (10) of any one of claims 1-7, wherein the battery housing (22) has right- and left-side wall portions (28-3, 28-4) extending rearward from right- and left-side edges, respectively, of the intermediate wall portion (28-1), wherein the battery accommodating space (28) is defined between the right- and left-side wall portions (28-3, 28-4) .

9. The drilling machine (10) of claim 8, wherein the bottom wall portion (28-2) is sloped downward from a front toward a rear.

10. The drilling machine (10) of claim 1 to 9, wherein the housing (22) has a right-side grip portion (26-1) provided on a top of the right-side part, and a left-side grip portion (26-2) provided on a top of the left-side part, the right-side grip portion (26-1) and the left-side grip portion (26-2) being configured to form a grip (26) when the right-side part and the left-side part are attached to the frame (20), the right-side grip portion (26-1) and the left-side grip portion (26-2) being connected and secured to each other with a screw (27) extending from the right-side grip portion (26-1) to the left-side grip portion (26-2).

11. The drilling machine (10) of any one of claims 1-10, wherein the front side of the front wall portion (20-1) of the frame (20) is provided with a dovetail groove (62), and the drilling drive unit (14) is provided with a slider (63) slidingly engageable with the dovetail groove (62).

12. The drilling machine (10) of claim 2 or 6, wherein the drive control circuit (36) is disposed at a lower position in the interior space (24), and a circuit member (34) connected to the drive control circuit (36) through wiring (68) is provided at an upper position in the interior space (24), the battery housing (22) having a partition plate (38) dividing the interior space (24) into upper and lower parts (24-1, 24-2) at a position between the drive control circuit (36) and the circuit member (34), the partition plate (38) being provided with a vertical opening (69) communicating between the upper and lower parts (24-1, 24-2), the opening being provided with a seal member (39) sealingly engaged with the opening (69), the wiring (35) being routed through the opening (69) and sealed from the partition plate (38) by the seal member (39).

## Patentansprüche

1. Bohrmaschine (10), die Folgendes aufweist:
einen Rahmen (20) mit einem unteren Wandteil (20-2), der entfernbar an einem Werkstück angebracht ist, welches einem Bohrvorgang unterworfen werden soll, und einem vorderen Wandteil (20-1), der an den unteren Wandteil (20-2) angrenzt und von dem unteren Wandteil (20-2) nach oben verläuft, um eine L-Form zusammen mit dem unteren Wandteil (20-2) zu bilden, wobei der Rahmen (20) aus einem Metallmaterial gemacht ist;
eine Bohrantriebseinheit (14) mit einem Motor (48) zum drehbaren Antreiben eines Bohrwerkzeuges (44), wobei die Bohrantriebseinheit (14) an einer Vorderseite des vorderen Wandteils (20-1) angebracht ist, so dass sie vertikal entlang des vorderen Wandteils (20-1) bewegbar ist, um das Bohrwerkzeug (44) zu dem Werkstück hin und weg von diesem zu bringen, wobei der unteren Wandteil (20-2) an dem Werkstück gesichert ist; und
ein Batteriegehäuse (22), welches separat vom Rahmen (20) vorgesehen ist und aus einem Kunststoffmaterial gemacht ist, wobei das Batteriegehäuse (22) an dem Rahmen (20) so angebracht ist, dass eine Körpereinheit (12) der Bohrmaschine (10) zusammen mit dem Rahmen (20) gebildet wird, wobei das Batteriegehäuse (22) einen Zwischenwandteil (28-1) hat, der direkt über dem unteren Wandteil (20-2) positioniert ist und weg von und parallel zu dem vorderen Wandteil (20-1) verläuft, und einen Bodenwandteil (28-2), der von dem Zwischenwandteil (28-1) nach hinten verläuft, wobei der Zwischenwandteil (28-1) und der Bodenwandteil (28-2) zusammenarbeiten, um einen Batterieaufnahmeraum (28) zu definieren, um in entfernbarer Weise eine Batterie (16) als eine Leistungsquelle zum Antrieb des Motors (48) aufzunehmen, so dass zumindest ein Teil des Batterieaufnahmeraums (28) an einer Hinterseite des vorderen Wandteils (20-1) und direkt über dem unteren Wandteil (20-2) positioniert ist, wobei das Batteriegehäuse (22) einen rechten Seitenteil (22-1) und einen linken Seitenteil (22-2) aufweist, die derart an dem Rahmen (20) angebracht sind, dass der Rahmen (20) von den rechten und linken Seiten sandwichartig dazwischen aufgenommen ist.

2. Bohrmaschine (10) nach Anspruch 1, wobei ein Innenraum (24) zum Anordnen einer Antriebssteuerschaltung (36) zur Steuerung des Motors (48) zwischen dem Rahmen (20) und dem Batteriegehäuse (22) ausgebildet ist.

3. Bohrmaschine (10) nach einem der Ansprüche 1 oder 2, die weiter eine Sicherungs- bzw. Fixierungseinheit (18) aufweist, die an einer Unterseite des unteren Wandteils (20-2) angebracht ist, um in entfernbarer Weise den unteren Wandteil (20-2) an dem Werkstück zu fixieren.

4. Bohrmaschine (10) nach Anspruch 3, wobei die Fixierungseinheit (18) eine Elektromagnetsicherungseinheit ist, die mit der Batterie (16) verbunden ist.

5. Bohrmaschine (10) nach Anspruch 4, die weiter Folgendes aufweist:
einen Elektromagnetschalter (70) zum Aktivieren der Elektromagnetfixierungseinheit (18); und
einen Motorschalter (74) zum Starten des Motors (48);
wobei der Elektromagnetschalter (70) und der Motorschalter (74) jeweils auf unterschiedlichen Seiten des Batteriegehäuses (22) vorgesehen sind.

6. Bohrmaschine (10) nach Anspruch 2, wobei die Antriebssteuereinheit (36) parallel zum vorderen Wandteil (20-1) oder dem unteren Wandteil (20-2) des Rahmens (20) im Innenraum (24) angeordnet ist.

7. Bohrmaschine (10) nach einem der Ansprüche 1-6, wobei der Rahmen (20) eine Rippe (20-3) der rechten Seite hat, die zwischen jeweiligen Kanten der rechten Seite des unteren Wandteils (20-2) und dem vorderen Wandteil (20-1) vorgesehen ist, und eine Rippe (20-4) der linken Seite, die zwischen jeweiligen Kanten der linken Seit des unteren Wandteils (20-2) und dem vorderen Wandteil (20-1) vorgesehen ist.

8. Bohrmaschine (10) nach einem der Ansprüche 1-7, wobei das Batteriegehäuse (22) rechte und linke Seitenwandteile (28-3, 28-4) hat, die von den entsprechenden Kanten der rechten bzw. linken Seite des Zwischenwandteils (28-1) nach hinten verlaufen, wobei der Batterieaufnahmeraum (28) zwischen den rechten und linken Seitenwandteilen (28-3, 28-4) definiert ist.

9. Bohrmaschine (10) nach Anspruch 8, wobei der Bodenwandteil (28-2) von vorne nach hinten abwärts geneigt ist.

10. Bohrmaschine (10) nach Anspruch 1 bis 9, wobei das Gehäuse (22) einen Griffteil (26-1) der rechten Seite hat, der an einem Oberteil des rechten Seitenteils vorgesehen ist, und einen Griffteil (26-2) der linken Seite, der an einem Oberteil des linken Seitenteils vorgesehen ist, wobei der Griffteil (26-1) der rechten Seite und der Griffteil (26-2) der linken Seite konfiguriert sind, um einen Griff (26) zu bilden, wenn der rechte Seitenteil und der linke Seitenteil an dem Rahmen (20) angebracht sind, wobei der Griffteil (26-1) der rechten Seite und der Griffteil (26-2) der linken Seite miteinander verbunden sind und aneinander durch eine Schraube (27) gesichert sind, die sich von dem Griffteil (26-1) der rechten Seite zum Griffteil (26-2) der linken Seite erstreckt.

11. Bohrmaschine (10) nach einem der Ansprüche 1-10, wobei die Vorderseite des vorderen Wandteils (20-1) des Rahmens (20) mit einer Schwalbenschwanznut (62) versehen ist, und wobei die Bohrantriebseinheit (14) mit einem Gleitelement (63) versehen ist, welches in gleitender Weise mit der Schwalbenschwanznut (62) in Eingriff gebracht werden kann.

12. Bohrmaschine (10) nach Anspruch 2 oder 6, wobei die Antriebssteuerschaltung (36) an einer unteren Position im Innenraum (24) angeordnet ist, und wobei ein Schaltungsglied (34), welches durch eine Verdrahtung (68) mit der Antriebssteuerschaltung (36) verbunden ist, an einer oberen Position in dem Innenraum (24) vorgesehen ist, wobei das Batteriegehäuse (22) eine Unterteilungsplatte (38) hat, welche den Innenraum (24) in obere und untere Teile (24-1, 24-2) an einer Position zwischen der Antriebssteuerschaltung (36) und dem Schaltungsglied (34) unterteilt, wobei die Unterteilungsplatte (38) mit einer vertikalen Öffnung (69) versehen ist, die eine Verbindung zwischen den oberen und unteren Teilen (24-1, 24-2) herstellt, wobei die Öffnung mit einem Dichtungsglied (39) versehen ist, welches in dichtender Weise mit der Öffnung (69) in Eingriff ist, wobei die Verdrahtung (35) durch die Öffnung (69) geleitet ist und durch das Dichtungsglied (39) gegenüber der Unterteilungsplatte (38) abgedichtet ist.

## Revendications

1. Machine de perçage (10), comprenant :
un châssis (20) ayant une partie de paroi inférieure (20-2) fixée de façon amovible à une pièce à usiner qui doit être percée et une partie de paroi avant (20-1) contiguë à la partie de paroi inférieure (20-2) et s'étendant vers le haut depuis la partie de paroi inférieure (20-2) pour former une forme en L conjointement avec la partie de paroi inférieure (20-2), le châssis (20) étant constitué d'un matériau métallique ;
une unité d'entraînement de perçage (14) ayant un moteur (48) pour entraîner en rotation un outil de perçage (44), l'unité d'entraînement de perçage (14) étant fixée à un côté avant de la partie de paroi avant (20-1) de sorte à pouvoir se déplacer verticalement le long de la partie de paroi avant (20-1) pour amener l'outil de perçage (44) à proximité et loin de la pièce à usiner, la partie de paroi inférieure (20-2) étant fixée à la pièce à usiner ; et
un boîtier de batterie (22) préparé séparément du châssis (20) et constitué d'un matériau en résine, le boîtier de batterie (22) étant fixé au châssis (20) pour former une unité de corps (12) de la machine de perçage (10) avec le châssis (20), le boîtier de batterie (22) ayant une partie de paroi intermédiaire (28-1) placée directement au-dessus de la partie de paroi inférieure (20-2) et s'étendant espacé de et parallèlement à la partie de paroi avant (20-1) et une partie de paroi inférieure (28-2) s'étendant vers l'arrière depuis la partie de paroi intermédiaire (28-1), la partie de paroi intermédiaire (28-1) et la partie de paroi inférieure (28-2) coopérant pour définir un espace de réception de batterie (28) pour recevoir de façon amovible une batterie (16) servant de source d'énergie pour entraîner le moteur (48) de sorte qu'au moins une partie de l'espace de réception de batterie (28) est placée à l'arrière de la partie de paroi avant (20-1) et directement au-dessus de la partie de paroi inférieure (20-2), le boîtier de batterie (22) comprenant une partie de côté droit (22-1) et une partie de côté gauche (22-2), qui sont fixées au châssis (20) d'une façon telle que le châssis (20) soit en sandwich entre les côtés droit et gauche.

2. Machine de perçage (10) selon la revendication 1, dans laquelle un espace intérieur (24) pour recevoir un circuit de commande d'entraînement (36) pour commander le moteur (48) est formé entre le châssis (20) et le boîtier de batterie (22).

3. Machine de perçage (10) selon l'une quelconque des revendications 1 ou 2, comprenant en outre :
une unité de fixation (18) fixée à un côté inférieur de la partie de paroi inférieure (20-2) pour fixer de façon amovible la partie de paroi inférieure (20-2) à la pièce à usiner.

4. Machine de perçage (10) selon la revendication 3, dans laquelle l'unité de fixation (18) est une unité de fixation du type à électroaimant connectée à la batterie (16).

5. Machine de perçage (10) selon la revendication 4, comprenant en outre :
un commutateur d'électroaimant (70) pour activer l'unité de fixation du type à électroaimant (18) ; et
un commutateur de moteur (74) pour démarrer le moteur (48) ;
dans laquelle le commutateur d'électroaimant (70) et le commutateur de moteur (74) sont prévus sur des côtés latéraux différents, respectivement, du boîtier de batterie (22).

6. Machine de perçage (10) selon la revendication 2, dans laquelle le circuit de commande d'entraînement (36) est disposé parallèlement à la partie de paroi avant (20-1) ou à la partie de paroi inférieure (20-2) du châssis (20) dans l'espace intérieur (24).

7. Machine de perçage (10) selon l'une quelconque des revendications 1 à 6, dans laquelle le châssis (20) a une nervure côté droit (20-3) prévue entre les bords respectifs côté droit de la partie de paroi inférieure (20-2) et de la partie de paroi avant (20-1), et une nervure côté gauche (20-4) prévue entre les bords respectifs côté gauche de la partie de paroi inférieure (20-2) et de la partie de paroi avant (20-1).

8. Machine de perçage (10) selon l'une quelconque des revendications 1 à 7, dans laquelle le boîtier de batterie (22) a des parties de paroi côté droit et côté gauche (28-3, 28-4) s'étendant vers l'arrière depuis les bords côté droit et côté gauche, respectivement, de la partie de paroi intermédiaire (28-1), dans laquelle l'espace de réception de batterie (28) est défini entre les parties de paroi côtés droit et gauche (28-3, 28-4).

9. Machine de perçage (10) selon la revendication 8, dans laquelle la partie de paroi inférieure (28-2) est inclinée vers le bas depuis l'avant vers l'arrière.

10. Machine de perçage (10) selon l'une quelconque des revendications 1 à 9, dans laquelle le boîtier (22) a une partie de préhension côté droit (26-1) prévue sur le haut de la partie côté droit, et une partie de préhension côté gauche (26-2) prévue sur le haut de la partie côté gauche, la partie de préhension côté droit (26-1) et la partie de préhension côté gauche (26-2) étant configurées pour former une poignée (26) quand la partie côté droit et la partie côté gauche sont fixées au châssis (20), la partie de préhension côté droit (26-1) et la partie de préhension côté gauche (26-2) étant connectées et fixées l'une à l'autre avec une vis (27) s'étendant depuis la partie de préhension côté droit (26-1) vers la partie de préhension côté gauche (26-2).

11. Machine de perçage (10) selon l'une quelconque des revendications 1 à 10, dans laquelle le côté avant de la partie de paroi avant (20-1) du châssis (20) est muni d'une rainure en queue d'aronde (62), et l'unité d'entraînement de perçage (14) est munie d'un coulisseau (63) pouvant être engagé à coulissement dans la rainure en queue d'aronde (62).

12. Machine de perçage (10) selon la revendication 2 ou 6, dans laquelle le circuit de commande d'entraînement (36) est placé au niveau d'une position inférieure dans l'espace intérieur (24), et un élément de circuit (34) connecté au circuit de commande d'entraînement (36) par l'intermédiaire d'un câblage (68) est prévu au niveau d'une position supérieure dans l'espace intérieur (24), le boîtier de batterie (22) ayant une plaque de séparation (38) divisant l'espace intérieur (24) en des parties supérieure et inférieure (24-1, 24-2) au niveau d'une position entre le circuit de commande d'entraînement (36) et l'élément de circuit (34), la plaque de séparation (38) étant munie d'une ouverture verticale (69) communiquant entre les parties supérieure et inférieure (24-1, 24-2), l'ouverture étant munie d'un élément de joint (39) en prise de façon étanche avec l'ouverture (69), le câblage (35) étant acheminé à travers l'ouverture (69) et scellé à partir de la plaque de séparation (38) par l'élément de joint (39) .
